# EUROPEAN PATENT SPECIFICATION

(11) **EP 1 820 319 B1**
(45) Date of publication and mention of the grant of the patent: **17.06.2015**
(21) Application number: 05816103.5
(22) Date of filing: 12.12.2005
(51) Int. Cl.: H04L 29/06, H04L 29/12

(54) **SESSION CONTROLLER AND METHOD OF OPERATING A SESSION CONTROLLER**
SITZUNGSSTEUERUNG UND VERFAHREN ZUM BETRIEB EINER SITZUNGSSTEUERUNG
CONTROLEUR DE SESSION ET PROCEDE DE MISE EN OEUVRE D'UN CONTROLEUR DE SESSION

(30) Priority: 10.12.2004 GB 0427103
(43) Date of publication of application: 22.08.2007
(73) Proprietor: Telefonaktiebolaget LM Ericsson (publ), 164 83 Stockholm (SE)
(72) Inventor: ZETTERLUND, Jerker, SE-116 30 Stockholm (SE); HEDENSJÖ, Mats, S-114 22 Stockholm (SE); FERNGREN, Per, S-168 68 Bromma (SE); HOLMBERG, Christer, FI-02400 Kirkkonummi (FI); VORMISTO, Hannu, FI-02300 Espoo (FI); KNIGHT, Anthony, Hove Sussex BN3 5AD (GB)
(74) Representative: Ericsson
(86) International application number: PCT/EP2005/056707
(87) International publication number: WO 2006/061440

(56) References cited:
- EP-A- 1 480 408
- EP-A2- 1 465 381
- WO-A-02/09387
- BAJKO G ET AL: "Multimedia sessions between 3G wireless and Internet users" ICC 2001, IEEE INTERNATIONAL CONFERENCE ON COMMUNICATIONS, NEW YORK, NY : IEEE, US, vol. VOL. 1 OF 10, 11 June 2001 (2001-06-11), pages 435-439, XP010553041 ISBN: 0-7803-7097-1

## Description

### 1. Description of the "prior art"

### 1.1 Session Controllers

For reasons of security, QoS control, NAPT (Network Address and/or Port number) traversal, etc. many VoIP and IP multimedia service providers are starting to require session controller nodes to be placed at the border between their VoIP/IP Multimedia core network and 1) an access network for residential and enterprise customers, as well as 2) at the network borders towards other service providers VoIP/Multimedia networks.

Session Controller, Session Border Controller, Border Controller, Boundary Traversal Unit, etc. - all are different names assigned by vendors of products belonging to a new category of VoIP and Multimedia related IP-IP gateways. This type of equipment has grown so quickly in popularity that products have reached commercialisation before the industry has agreed on uniform nomenclature. However, the industry now appears to be converging towards the term "Session Controller" for this type of equipment [Ref.1], and this term will be used in the present specification to cover any of the above devices.

Session Controllers are found at crossings between IP networks, where they funnel sessions - signalling together with associated media streams - of real time IP voice, video and other data across the borders between the IP networks, using IP signalling protocols such as H.323, SIP (Session Initiation Protocol), MGCP or Megaco/H.248. The aim of Session Controllers is to manage IP sessions - signalling and media streams together - across the IP network borders in order to ensure Security, Quality of Service, Service Level Agreements, Legal Intercept, NAPT/FW (FireWall) traversal, and other critical functions for IP streams.

With network border is here meant the handoff point of any IP-enabled infrastructure where a session passes from one network (or portion of the network) to another. A border can be defined as the edge of a carrier's network or the demarcation point between an enterprise and its carrier. Some borders may even occur within a single carrier's network, existing between different portions of that network. All session controllers deal with IP traffic crossing borders.

The Session Controller in a SIP network can be said to be logically and/or physically formed by two entities, a signalling proxy (SP), e.g. a SIP B2BUA (Back-to-back User Agent) and a MP (Media Proxy). Parts of the functionality provided by the B2BUA or the MP can be required in multimedia networks even without the presence of a complete session controller.

### 1.2 Hosted NAPT/FW Traversal

SIP clients in home and enterprise networks often sit behind a customer premises FW. This poses problems for inbound (to clients) SIP/RTP traffic, since inbound sessions (to clients) will be typically blocked - the FW can only be "opened" by outbound traffic.

One could statically open a wide range of client ports in the firewall to permit traffic from any external host towards internal hosts, but from a security point of view this would not normally be acceptable. Instead, the ports for the right protocols should be opened just when the SIP and pertaining media sessions require it, and closed again when the session terminates.

The situation becomes even more complex when a firewall also performs NAPT, which is used when a network's internal IP addresses cannot be used outside the network either because they are invalid for use outside the network (e.g. private addresses), or because the internal addressing must be hidden from external networks e.g. for security reasons. NAPTs are also used to map a large address space inside a private network to a smaller set of addresses on the outside, and NAPTs are furthermore useful to hide external (ISP) network topology changes. NAPT allows hosts in a private network to transparently communicate with destinations in external networks, and vice versa. In other words, NAPT devices provide or support transparent routing of IP packets between disparate address realms, by modifying address contents in the IP header to be valid in the address realm into which the IP packet is routed.

A problem with a dynamic FW/NAPT is that it sets up address translation bindings when a user (SIP client) starts to send an IP packet towards a public IP address, but a binding is only kept as long as there is a regular flow of IP packets to, or from, the user. If the user is inactive for a while - often in the range of a minute - the NAPT will remove the binding and perform a new binding the next time the user starts to send IP packets. The client will thus not be reachable from the public network domain once the binding has been taken down, and the client address seen from outside will vary over time.

The problem with FW/NAPT traversal is well known and many different solutions exist, using special protocols and NAPT traversal servers such as STUN and TURN. However, having a session controller interfacing the public side of the FW/NAPT makes it possible to solve the FW/NAPT traversal without special protocols such as STUN or TURN and without additional equipment in form of STUN and TURN servers or tunnel clients within the customer premises domain. To handle FW/NAPT in the session path the following is supported.
1 In connection with receiving a REGISTER message from a SIP client, the signalling proxy inspects the source address/port of the IP packet in which the REGISTER message arrived. If this address is not the same as the address in the SIP Contact-header of the REGISTER message, then there is a NAPT in the path towards the SIP client, and the source address of the IP packet is to be used for all SIP messages towards the client instead of the address in the contact header.
2 The firewall, and address bindings, in the NAPT must be kept open permanently after the initial registration, to enable INVITES towards the clients to pass through the FW/NAPT and reach the correct location. There exist several methods for keeping the FW/NAPT bindings for a client open. SIP clients and modern home FW/NAPT products often supports UPNP (universal plug and play), which means that the client can keep the FW/NAPT bindings open without involving Session Controller; this is however not sufficient if there is a NAPT further down in the session path.

Instead, if UPNP is not supported, keeping the FW/NAPT bindings open are commonly accomplished by the different clients, on customer premises, periodically sending IP packets to the SIP port on the Session Controller, frequently enough (often every 30 sec) for the binding in the FW/NAPT not to time-out. The general way of doing this is for clients to set their re-register interval to a value low enough for the periodic re-registration to keep the FW/NAPT bindings open. Since this will be heavy load on the Session Controller, modem SIP clients (like the HotSIP Active Contact client) can as alternative send empty UDP packets (when SIP over UDP) SIP line feed "CRLF" character (when SIP over TCP).

See also RFC3581 for symmetric response routing.

Note: To alleviate the load from frequent re-registrations from clients, enterprise customers often also place a customer premises ALG between the clients and the enterprise FW/NAPT. The ALG funnels all SIP signalling through the FW/NAPT over one single IP address, and thus only need to keep one single FW/NAPT binding open for SIP signalling.
3 The Session Controller must only forward re-registration messages towards the CSCF at the re-registration interval specified by the CSCF in its response to the initial register message.
4 On a per media stream basis the session controller allocates the address/ports for ingress media when receiving SDP parameters from the SIP INVITE; the SDP answer will contain the address/port-numbers allocated by the session controller. However, the egress address/port to use is unknown if there is a FW/NAPT in the path of the media stream. Therefore the media proxy must start to monitor for incoming RTP media packets on the allocated ingress address/port. When the first incoming media packet arrives in the inbound port, the media proxy must read the source address/port field of the packet and set the media proxy egress address/port bindings to this; this is often referred to as "RTP port latching" or "latching to a media plane address and port".

The B2BUA part of the session controller needs a method for controlling the MP part of the session controller and H.248 has been used for this purpose. In an ETSI TISPAN / MSF contribution [2] a NAPT traversal package containing a specific H.248 property called "NAPT Processing" was proposed. When this property is applied to a termination it overrides any addresses that may be passed in the Remote descriptor for the termination. Instead the MG will use the source address and source port seen in the incoming media stream as the destination address and destination port of the outgoing media stream. The incoming media stream in this case can be classified only by destination address and destination port (as both source address and port are unknown prior to the arrival of the stream).

EP1465381 is background art on mobility of voice over IP terminals.

### 1.3 Problems and limitations

The present inventors have appreciated that the NAPT traversal package contribution does not cater for the case when the SIP client changes its IP address or port during a call. This behaviour from the client is allowed in a SIP network.

If the B2BUA, in the event of the SIP client changing address and/or port, did not take any action towards the MP it would lead to an unwanted stop in the media flow since the client changing address/port would lead to a change in external IP address and port of the NAPT which would not be recognized by the MP and the traffic from the NAPT would thus be blocked out and the traffic to the NAPT would be sent to wrong address/port.

The inventors have further appreciated that problems may occur if the B2BUA, in the event of the SIP client changing address and/or port, once again instructed the MP to latch, since it would be likely in such circumstances that there is still hysteresis media floating from the previously used source and that the MP thus would latch to the "old" source again.

One or more aspects of the invention is / are set out in the independent claim(s). Apparatus aspects corresponding to method aspects disclosed herein are also provided, and vice versa.

### 2. Description of the preferred embodiments

### 2.1 General

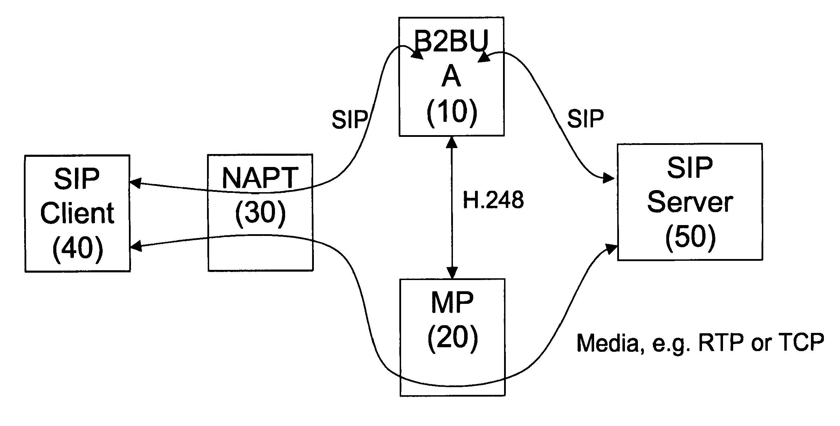

Some preferred embodiments of the invention will now be described by way of example only and with reference to the accompanying drawing, which shows a simplified diagram of an embodiment of the present invention. When the B2BUA 10 detects that a SIP client 40 behind a NAPT 30 is changing its IP address and/or port for an ongoing media session, the B2BUA 10 instructs the MP 20 to perform an operation which will herein be referred to as "RE-LATCH". Re-latching means that the MP 20 will continue sending and receiving media to/from the currently used external port in the NAPT 30 but the MP 20 will also start looking for media arriving to the open port in the MP 20 with any new address/port source. Once the first IP packet with a different source address/port than the MP 20 is currently latched to arrives, the MP 20 will re-latch to the new source and start sending its media to the new source and only accept media from this new source.

### 2.2 H.248 Control of re-latching

The B2BUA instructing the MP to behave this way, if H.248 is used between B2BUA and MP, could use an H.248 property "NAPT Processing" with the following characteristics:
Name: NAPT Processing
Property ID: nap
Description: Instructs the MP to apply NAPT processing to the incoming flow.
Type: Enumeration
Values: OFF (default), LATCH, RELATCH
Defined in: LocalControlDescriptor
Procedures: ...

The NAPT Processing property allows the MP to be configured to support media flows that have passed through an unknown number of CPE or network based NAPT devices. It should be noted that when Early Media (18x) is indicated then it may not be possible to perform latching, as there may be no forward media from which to detect the address and port. If any packets are received under these circumstances then they will be used for latching and then discarded.

When the NAPT Processing property is set to OFF then the MP will open a pinhole for the IP address and port defined in the received remote SDP.

When the NAPT Processing property is set to LATCH then this results in the MP ignoring the addresses received in the Remote SDP. Instead the MP will use the source address and source port seen in the incoming media stream as the destination address and destination port of the outgoing media stream. The incoming media stream in this case can be classified only by destination address and destination port, as both source address and port are unknown prior to the arrival of the stream.

When the NAPT Processing property is set to RELATCH then the MP will perform a similar process to the latching process described above. The difference is that the MP will check for a change of remote IP address/port on the received stream. If/when a new remote IP address and/or port are detected then they will be used for future outgoing packets. After relatching any packets received on the old address and port combination will be considered as malicious and will be treated accordingly (discarded and counted).

The NAPT Processing property is passed in the LocalControl descriptor. When no latching/relatching is to be performed then the property can be included in the LocalControl descriptor with value OFF or omitted from the descriptor. If latching is to be performed then the property will be included with value LATCH. The value will be present in all subsequent Local Control descriptors in order to maintain the latched to values. If relatching is to be performed then the property will contain the RELATCH value. Subsequent LocalControl descriptors will contain the LATCH value in order to maintain the relatched values.

It will be understood that during the course of the above relatching technique the MP 20 extracts the new remote IP address and/or port from the received stream without receiving the new remote IP address and/or port in a (separate) notification. Thus no notification (whose only purpose it is to inform the MP of the new remote IP address and/or port) takes place. However, in preferred embodiments of the invention the MP is notified of the fact that the client 40 is changing or has changed its IP address and/or port so that the MP can monitor the incoming stream for a change of remote IP address/port.

As a refinement of the above embodiment, the SP detects from the SIP signalling what type of media the client is intending to send after the address and/or port change. This may be the same type as before the address and/or port change or of a different type. The SP then notifies the MP of the type of media expected, and the MP will only RELATCH to the new source if the media type of the media received by the MP after receiving the RELATCH instruction matches the type of media as notified by the SP.

Whilst in the foregoing text embodiments have been described where use has been made of a NAPT Processing property for performing the re-latch operation, in alternative embodiments use is made of a "signal" for performing the re-latch operation. If H.248 is used, then the signal could have the following characteristics:
Signal Name: Latching
Signal ID: latch
Description: This signal orders NAPT Traversal processing
Signal Type: Brief
Duration: Not applicable
Defined in: SignalDescriptor

Additional parameters:
Parameter Name: NAPT Traversal Processing
Parameter ID: napt
Description: Instructs the MP to apply NAPT processing to the incoming flow.
Type: Enumeration
Optional: No
Possible values: OFF, LATCH, RELATCH
Default: OFF

The Signal Type and Duration are default values specified by the package (in this case "ipnapt"), although these could be modified according to H.248 standard signal procedures. Preferably, the package is H.248.37 (IP NAPT Traversal Package).

In a preferred embodiment based on the above technique, a time-out mechanism for the latch/re-latch is introduced. To this end the Signal Type is defined as, or modified to, "TimeOut" instead of "Brief", and the "Duration" is set to a chosen value. This closes the possibility to latch/relatch after the time-out (i.e. a period of time corresponding to the set "Duration" value). This can be particularly useful e.g. when a client decides to change its address and/or port and signals this in a "SIP Re-INVITE" message, but the NAPT does not change the outgoing source address and/or port. Using the technique according to this preferred embodiment the MP would only open the relatch possibility for a short period of time (as specified by "Duration"). This contrasts with the case in which the Signal Type is set to "Brief", where it is possible that the relatching window remains open throughout the duration of the call (e.g. if the NAPT neither changes its address nor its port), making the technique more vulnerable to a "malicious relatch" (i.e. a malicious source sending their own stream towards the MP to "take the session between the client and the MP over").

In a particularly preferred embodiment the relatch possibility remains open only for a specified duration, but is closed immediately once the relatch has been performed (i.e. without there being the possibility of a further relatch before the end of the specified duration).

Alternatively, or in addition, other additional parameters could be defined:
Off-set Timer:
   An Off-set Timer parameter could be used to ensure that the possibility to latch/relatch will only be open after expiry of a (pre)defined period of time (e.g. 1, 2, 5 or 10 seconds). This may be useful e.g. in a "SIP forking case" and multiple clients are sending "Early Media" (SIP 180 Ringing). When one client picks up the phone it might take some time before the other client stops sending "Early Media". In order to ensure that the correct/wanted media source will be latched to, the MP will only open the latch/relatch possibility after this off-set timer has elapsed. Of course, the Off-set Timer parameter may find application in other contexts.

Specifying the re-latch operation as a signal rather than a property may have distinct advantages: It is sometimes necessary to perform a latch/re-latch operation in two subsequent commands (e.g. in SIP forking cases). If the NAPT processing is specified as a "property" one would normally need to add an extra MODIFY command to the signalling and set the property to OFF in-between the subsequent commands. This is not necessary if the NAPT processing is specified as a "signal".

Further, implementing the re-latch mechanism by means of a "signal" means that the "signal" does not need to be included in every subsequent message, whereas this would normally be the case if the re-latch mechanism is implemented by means of a "property".

Whether the re-latch mechanism is implemented by means of a "signal" or a "property", in preferred embodiments the session controller is notified when latch/re-latch has taken place, and preferably also to which address and/or port.

Further, preferably the SP is notified by the MP application over H.248 when latch/re-latch has taken place, and preferably also to which address and/or port.

In preferred embodiments the re-latch is only performed if the address stays the same but the port changes. In this way it can be ensured that only traffic from the same NAPT will be accepted. In this way it can be ensured that traffic from a different address can be discarded, such traffic indicating fraudulent/malicious behaviour.

This concept is taken further if, according to further preferred embodiments, an address and/or port range is specified as part of a latch/relatch function so that a latch/relatch is only accepted from media sources within the specified range or ranges. The range or ranges is/are specified/configured by the node provider/operator in conjunction with setting up/defining the network connection towards the access network. The range/ranges may be chosen such that only "well known" NAPT's would be allowed to send media towards the session controller.

It will be appreciated that the MP and the SP could be physically separate entities, or could be combined into one entity. In particular in the case of the MP and the SP being so combined, it may not be necessary to use H.248 for the communication between the SP and the MP. In any event, whilst the use of H.248 is preferred by the present inventors, it will be appreciated that other protocols could be used instead.

While the above description has been made with reference to NAPT (i.e. a Translator which translates the Network Address and/or Port number), it will be appreciated that the invention can also be used in connection with a NAT (Network Address Translator). Further, the above description has been made using a SIP client as an example, but it will be appreciated that it is also applicable to other clients, e.g. multimedia clients.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein.

### 3. References

[1] Session Controller Forum Website http://www.sessioncontrollerforum.org
[2] Msf2004.034.01 Liaison Regarding H.248 profile for Gate Control - Draft ETSI ES 2XX XXX v1.0.3 (2004-02).

## Claims

1. A method of operating a signalling proxy for use in a Session Controller arranged to communicate with a client and comprising said signalling proxy and a media proxy, the Session Controller being latched to a media plane address and port, the method comprising:
detecting, at the signalling proxy, that the client is changing or has changed its IP address and/or port to a different address and/or port;
instructing the media proxy
- to monitor for incoming media from the client of an address and/or port different from the address and/or port that the media proxy has been using previously as the address and/or port of the client; and
- to use said different address and/or port as destination address and/or port for media from the media proxy to the client if any media is received by the media proxy of such a different address and/or port.

2. A method as in claim 1, wherein the signalling proxy notifies the media proxy what type of media the client will send to the media proxy after the address and/or port change, and the media proxy only uses said different address and/or port as said destination address and/or port if the type of media of said media of such a different address and/or port as received by the media proxy corresponds to the type of media as notified by the signalling proxy.

3. A method as in claim 1 or 2, wherein said different port is only used if the address via which the media has been received is the same as the address to which the Session Controller has been latched.

4. A method as in any of claims 1 to 3, wherein the signalling proxy and the media proxy communicate via H.248.

5. A method as in claim 4, wherein instructing the media proxy comprises sending a parameter from the signalling proxy to the media proxy, which parameter can have 3 possible values.

6. A method as in claim 4, wherein instructing the media proxy comprises sending a H.248 signal from the signalling proxy to the media proxy.

7. A method as in any of claims 1 to 6, wherein the signalling proxy and the media proxy are physically separate devices.

8. A method as in any of claims 1 to 7, wherein the media proxy discards any media of the previously used address and port which it receives after receiving media of such a different address and/or port.

9. A method as in any of claims 1 to 8, wherein the media proxy, after receiving media of such a different address and/or port, discards any media of any address and port combination other than the combination of said different address and/or port.

10. A method as in any of claims 1 to 9, wherein the media proxy, after being so instructed, continues to receive media of the previously used address and port without discarding it until it receives media of such a different address and/or port.

11. A method as in any of claims 1 to 10, wherein the session controller communicates with the client via one or more Network Address and/or Port Number Translator.

12. A Session Controller arranged to communicate with a client and comprising a signalling proxy and a media proxy, the Session Controller being arranged to latch to a media plane address and port,
wherein the signalling proxy is arranged to detect that the client is changing or has changed its IP address and/or port to a different address and/or port and is arranged to instruct the media proxy, in response to the detection of such a change, to monitor for incoming media from the client of an address and/or port different from the address and/or port that the media proxy has been using previously as the address and/or port of the client; and
wherein the media proxy is arranged to use said different address and/or port as destination address and/or port for media from the media proxy to the client if any media is received by the media proxy of such a different address and/or port.

13. A Session Controller as in claim 12, wherein the signalling proxy is arranged to notify the media proxy what type of media the client will send to the media proxy after the address and/or port change, and the media proxy is arranged to only use said different address and/or port as said destination address and/or port if the type of media of said media of such a different address and/or port as received by the media proxy corresponds to the type of media as notified by the signalling proxy.

14. A Session Controller as in claim 12 or 13, arranged to use said different port only if the address via which the media has been received is the same as the address to which the Session Controller has been latched.

15. A Session Controller as in any of claims 12 to 14, wherein the signalling proxy and the media proxy are arranged to communicate via H.248.

16. A Session Controller as in claim 15, wherein the signalling proxy is arranged to send a parameter to the media proxy so as to instruct the media proxy, the parameter having one of 3 possible values.

17. A Session Controller as in claim 15, wherein the signalling proxy is arranged to send a H.248 signal to the media proxy so as to instruct the media proxy.

18. A Session Controller as in any of claims 12 to 17, wherein the signalling proxy and the media proxy are physically separate devices.

19. A Session Controller as in any of claims 12 to 18, wherein the media proxy is arranged to discard any media of the previously used address and port which it receives after receiving media of such a different address and/or port.

20. A Session Controller as in any of claims 12 to 19, wherein the media proxy, after receiving media of such a different address and/or port, is arranged to discard any media of any address and port combination other than the combination of said different address and/or port.

21. A Session Controller as in any of claims 12 to 20, wherein the media proxy, after being so instructed, is arranged to continue to receive media of the previously used address and port without discarding it until it receives media of such a different address and/or port.

22. A Session Controller as in any of claims 12 to 21, wherein the session controller is arranged to communicate with the client via one or more Network Address and/or Port Number Translator.

23. A signalling proxy for use in a Session Controller, which Session Controller is arranged to communicate with a client and comprising said signalling proxy and a media proxy, the Session Controller being arranged to latch to a media plane address and port,
wherein the signalling proxy is arranged to detect that the client is changing or has changed its IP address and/or port to a different address and/or port and is arranged to instruct the media proxy, in response to the detection of such a change, to monitor for incoming media from the client of an address and/or port different from the address and/or port that the media proxy has been using previously as the address and/or port of the client.

24. A media proxy for use in a Session Controller, which Session Controller is arranged to communicate with a client and comprising a signalling proxy and said media proxy, the Session Controller being arranged to latch to a media plane address and port,
wherein the media proxy is arranged to receive an instruction from the signalling proxy, in response to the signalling proxy detecting that the client is changing or has changed its IP address and/or port to a different address and/or port, to monitor for incoming media from the client of an address and/or port different from the address and/or port that the media proxy has been using previously as the address and/or port of the client; and
wherein the media proxy is arranged to use said different address and/or port as destination address and/or port for media from the media proxy to the client if any media is received by the media proxy of such a different address and/or port.

## Patentansprüche

1. Verfahren zum Betreiben eines Signalisierungs-Proxys zur Verwendung in einer Sitzungssteuerung, die so ausgelegt ist, dass sie mit einem Client kommuniziert und den Signalisierungs-Proxy und einen Medien-Proxy umfasst, wobei die Sitzungssteuerung mit einer Adresse und einem Port auf Medienebene verriegelt ist, wobei das Verfahren umfasst:
Erkennen am Signalisierungs-Proxy, dass der Client seine IP-Adresse und/oder seinen IP-Port in eine andere Adresse und/oder einen anderen Port ändert oder geändert hat;
Anweisen des Medien-Proxys zum:
- Kontrollieren auf eingehende Medien vom Client einer Adresse und/oder eines Ports, die verschieden von der Adresse und/oder dem Port sind, die der Medien-Proxy vorher als die Adresse und/oder den Port des Clients verwendet hat; und
- Verwenden der verschiedenen Adresse und/oder des verschiedenen Ports als Zieladresse und/oder Zielport für Medien vom Medien-Proxy an den Client, wenn Medien solch einer verschiedenen Adresse und/oder solch eines verschiedenen Ports durch den Medien-Proxy empfangen werden.

2. Verfahren nach Anspruch 1, wobei der Signalisierungs-Proxy dem Medien-Proxy meldet, welchen Medientyp der Client nach der Änderung der Adresse und/oder des Ports an den Medien-Proxy senden wird, und der Medien-Proxy die verschiedene Adresse und/oder den verschiedenen Port nur dann als die Zieladresse und/oder den Zielport verwendet, wenn der Medientyp der Medien solch einer verschiedenen Adresse und/oder solch eines verschiedenen Ports, wie durch die Medien-Proxy empfangen, dem Medientyp entspricht, wie vom Signalisierungs-Proxy gemeldet.

3. Verfahren nach Anspruch 1 oder 2, wobei der verschiedene Port nur dann verwendet wird, wenn die Adresse, über welche die Medien empfangen wurden, gleich wie die Adresse ist, mit welcher die Sitzungssteuerung verriegelt wurde.

4. Verfahren nach einem der Ansprüche 1 bis 3, wobei der Signalisierungs-Proxy und der Medien-Proxy über H.248 kommunizieren.

5. Verfahren nach Anspruch 4, wobei das Anweisen des Medien-Proxys ein Senden eines Parameters vom Signalisierungs-Proxy an den Medien-Proxy umfasst, wobei der Parameter 3 mögliche Werte aufweisen kann.

6. Verfahren nach Anspruch 4, wobei das Anweisen des Medien-Proxys ein Senden eines H.248-Signals vom Signalisierungs-Proxy an den Medien-Proxy umfasst.

7. Verfahren nach einem der Ansprüche 1 bis 6, wobei der Signalisierungs-Proxy und der Medien-Proxy physisch getrennte Vorrichtungen sind.

8. Verfahren nach einem der Ansprüche 1 bis 7, wobei der Medien-Proxy jegliche Medien der vorher verwendeten Adresse und des vorher verwendeten Ports verwirft, welche er nach dem Empfang von Medien solch einer verschiedenen Adresse und/oder solch eines verschiedenen Ports empfängt.

9. Verfahren nach einem der Ansprüche 1 bis 8, wobei der Medien-Proxy nach dem Empfang von Medien solch einer verschiedenen Adresse und/oder solch eines verschiedenen Ports jegliche Medien jeglicher anderen Adress- und Portkombination als der Kombination der verschiedenen Adresse und/oder des verschiedenen Ports verwirft.

10. Verfahren nach einem der Ansprüche 1 bis 9, wobei der Medien-Proxy nach der entsprechenden Anweisung fortfährt, Medien der vorher verwendeten Adresse und des vorher verwendeten Ports zu empfangen, ohne sie zu verwerfen, bis er Medien solch einer verschiedenen Adresse und/oder solch eines verschiedenen Ports empfängt.

11. Verfahren nach einem der Ansprüche 1 bis 10, wobei die Sitzungssteuerung mit dem Client über einen oder mehrere Netzadress- und/oder Portnummern-Umsetzer kommuniziert.

12. Sitzungssteuerung, die so ausgelegt ist, dass sie mit einem Client kommuniziert und einen Signalisierungs-Proxy und einen Medien-Proxy umfasst, wobei die Sitzungssteuerung so ausgelegt ist, dass sie sich mit einer Adresse und einem Port auf Medienebene verriegelt,
wobei der Signalisierungs-Proxy so ausgelegt ist, dass er erkennt, dass der Client seine IP-Adresse und/oder seinen IP-Port in eine andere Adresse und/oder einen anderen Port ändert oder geändert hat, und so ausgelegt ist, dass er den Medien-Proxy in Reaktion auf die Erkennung solch einer Änderung anweist, auf eingehende Medien vom Client einer Adresse und/oder eines Ports zu kontrollieren, die verschieden von der Adresse und/dem Port sind, die der Medien-Proxy vorher als die Adresse und/oder den Port des Clients verwendet hat; und
wobei der Medien-Proxy so ausgelegt ist, dass er die verschiedene Adresse und/oder den verschiedenen Port als Zieladresse und/oder Zielport für Medien vom Medien-Proxy an den Client verwendet, wenn Medien solch einer verschiedenen Adresse und/oder solch eines verschiedenen Ports durch den Medien-Proxy empfangen werden.

13. Sitzungssteuerung nach Anspruch 12, wobei der Signalisierungs-Proxy so ausgelegt ist, dass er dem Medien-Proxy meldet, welchen Medientyp der Client nach der Änderung der Adresse und/oder des Ports an den Medien-Proxy senden wird, und der Medien-Proxy so ausgelegt ist, dass er die verschiedene Adresse und/oder den verschiedenen Port nur dann als die Zieladresse und/oder den Zielport verwendet, wenn der Medientyp der Medien solch einer verschiedenen Adresse und/oder solch eines verschiedenen Ports, wie durch die Medien-Proxy empfangen, dem Medientyp entspricht, wie vom Signalisierungs-Proxy gemeldet.

14. Sitzungssteuerung nach Anspruch 12 oder 13, die so ausgelegt ist, dass sie den verschiedenen Port nur dann verwendet, wenn die Adresse, über welche die Medien empfangen wurden, gleich wie die Adresse ist, mit welcher die Sitzungssteuerung verriegelt wurde.

15. Sitzungssteuerung nach einem der Ansprüche 12 bis 14, wobei der Signalisierungs-Proxy und der Medien-Proxy über H.248 kommunizieren.

16. Sitzungssteuerung nach Anspruch 15, wobei der Signalisierungs-Proxy so ausgelegt ist, dass er einen Parameter an den Medien-Proxy sendet, um den Medien-Proxy anzuweisen, wobei der Parameter einen von 3 möglichen Werten aufweist.

17. Sitzungssteuerung nach Anspruch 15, wobei der Signalisierungs-Proxy so ausgelegt ist, dass er ein H.248-Signal an den Medien-Proxy sendet, um den Medien-Proxy anzuweisen.

18. Sitzungssteuerung nach einem der Ansprüche 12 bis 17, wobei der Signalisierungs-Proxy und der Medien-Proxy physisch getrennte Vorrichtungen sind.

19. Sitzungssteuerung nach einem der Ansprüche 12 bis 18, wobei der Medien-Proxy so ausgelegt ist, dass er jegliche Medien der vorher verwendeten Adresse und des vorher verwendeten Ports verwirft, welche er nach dem Empfang von Medien solch einer verschiedenen Adresse und/oder solch eines verschiedenen Ports empfängt.

20. Sitzungssteuerung nach einem der Ansprüche 12 bis 19, wobei der Medien-Proxy so ausgelegt ist, dass er nach dem Empfang von Medien solch einer verschiedenen Adresse und/oder solch eines verschiedenen Ports jegliche Medien jeglicher anderen Adress- und Portkombination als der Kombination der verschiedenen Adresse und/oder des verschiedenen Ports verwirft.

21. Sitzungssteuerung nach einem der Ansprüche 12 bis 20, wobei der Medien-Proxy so ausgelegt ist, dass er nach der entsprechenden Anweisung fortfährt, Medien der vorher verwendeten Adresse und des vorher verwendeten Ports zu empfangen, ohne sie zu verwerfen, bis er Medien solch einer verschiedenen Adresse und/oder solch eines verschiedenen Ports empfängt.

22. Sitzungssteuerung nach einem der Ansprüche 12 bis 21, wobei die Sitzungssteuerung so ausgelegt ist, dass sie mit dem Client über einen oder mehrere Netzadress- und/oder Portnummern-Umsetzer kommuniziert.

23. Signalisierungs-Proxy zur Verwendung in einer Sitzungssteuerung, wobei die Sitzungssteuerung so ausgelegt ist, dass sie mit einem Client kommuniziert und den Signalisierungs-Proxy und einen Medien-Proxy umfasst, wobei die Sitzungssteuerung so ausgelegt ist, dass sie sich mit einer Adresse und einem Port auf Medienebene verriegelt,
wobei der Signalisierungs-Proxy so ausgelegt ist, dass er erkennt, dass der Client seine IP-Adresse und/oder seinen IP-Port in eine andere Adresse und/oder einen anderen Port ändert oder geändert hat, und so ausgelegt ist, dass er den Medien-Proxy in Reaktion auf die Erkennung solch einer Änderung anweist, auf eingehende Medien vom Client einer Adresse und/oder eines Ports zu kontrollieren, die verschieden von der Adresse und/dem Port sind, die der Medien-Proxy vorher als die Adresse und/oder den Port des Clients verwendet hat.

24. Medien-Proxy zur Verwendung in einer Sitzungssteuerung, wobei die Sitzungssteuerung so ausgelegt ist, dass sie mit einem Client kommuniziert und einen Signalisierungs-Proxy und den Medien-Proxy umfasst, wobei die Sitzungssteuerung so ausgelegt ist, dass sie sich mit einer Adresse und einem Port auf Medienebene verriegelt,
wobei der Medien-Proxy so ausgelegt ist, dass er in Reaktion darauf, dass der Signalisierungs-Proxy erkennt, dass der Client seine IP-Adresse und/oder seinen IP-Port in eine andere Adresse und/oder einen anderen Port ändert oder geändert hat, eine Anweisung vom Signalisierungs-Proxy empfängt, auf eingehende Medien vom Client einer Adresse und/oder eines Ports zu kontrollieren, die verschieden von der Adresse und/oder dem Port sind, die der Medien-Proxy vorher als die Adresse und/oder den Port des Clients verwendet hat; und
wobei der Medien-Proxy so ausgelegt ist, dass er die verschiedene Adresse und/oder den verschiedenen Port als Zieladresse und/oder Zielport für Medien vom Medien-Proxy für den Client verwendet, wenn Medien solch einer verschiedenen Adresse und/oder solch eines verschiedenen Ports durch den Medien-Proxy empfangen werden.

## Revendications

1. Procédé de fonctionnement d'un serveur mandataire de signalisation à utiliser dans un contrôleur de session agencé pour communique avec un client et comprenant ledit serveur mandataire de signalisation et un serveur mandataire média, le contrôleur de session état verrouillé à une adresse et port de plan média, le procédé comprenant de :
détecter, au niveau du serveur mandataire de signalisation, que le chient change ou a changé son adresse IP et/ou port en une adresse et/ou port différent ;
donner instruction au serveur mandataire média de
- surveiller les média entrants depuis le client d'une adresse et/ou port différent de l'adresse et/ou port que le serveur mandataire média a utilisé précédemment comme l'adresse et/ou port du client ; et
- utiliser ladite adresse et/ou port différent comme adresse et/ou port de destination pour les médias provenant du serveur mandataire média du client si un quelconque média est reçu par le serveur mandataire média d'une telle adresse et/ou port différent.

2. Procédé selon la revendication 1, dans lequel le serveur mandataire de signalisation notifie au serveur mandataire média quel type de média le client enverra au serveur mandataire média après le changement d'adresse et/ou port et le serveur mandataire média utilise seulement ladite adresse et/ou port différent comme ladite adresse et/ou port de destination si le type de média desdits média d'une telle adresse et/ou port différent tel que reçu par le serveur mandataire média correspond au type de média tel que notifié par le serveur mandataire de signalisation.

3. Procédé selon la revendication 1 ou 2, dans lequel ledit port différent est utilisé seulement si l'adresse via laquelle les médias ont été reçus est la même que l'adresse à laquelle le contrôleur de session a été verrouillé.

4. Procédé selon une quelconque des revendications 1 à 3, dans lequel le serveur mandataire de signalisation et le serveur mandataire média communiquent via H.248.

5. Procédé selon la revendication 4, dans lequel donner instruction au serveur mandataire média comprend d'envoyer un paramètre du serveur mandataire de signalisation au serveur mandataire média, lequel paramètre peut avoir 3 valeurs possibles.

6. Procédé selon la revendication 4, dans lequel donner instruction au serveur mandataire média comprend d'envoyer un signal H.248 du serveur mandataire de signalisation au serveur mandataire média.

7. Procédé selon une quelconque des revendications 1 à 6, dans lequel le serveur mandataire de signalisation et le serveur mandataire média sont des dispositifs physiquement séparés.

8. Procédé selon une quelconque des revendications 1 à 7, dans lequel le serveur mandataire média rejette tous médias de l'adresse et de port précédemment utilisés qu'il reçoit après la réception des médias d'une telle adresse et/ou port différent.

9. Procédé selon une quelconque des revendications 1 à 8, dans lequel le serveur mandataire média, après la réception de médias d'une telle adresse et/ou port différent, rejette tous médias de n'importe quelle combinaison d'adresse et de port autre que la combinaison de l'adresse et/ou port différent.

10. Procédé selon une quelconque des revendications 1 à 9, dans lequel le serveur mandataire média, après avoir reçu une telle instruction, continue de recevoir des médias de l'adresse et port précédemment utilisé sans les rejeter jusqu'à ce qu'il reçoive des médias d'une telle adresse et/ou port différent.

11. Procédé selon une quelconque des revendications 1 à 10, dans lequel le contrôleur de session communique avec le client via un ou plusieurs traducteurs d'adresse de réseau et/ou numéro de port.

12. Contrôleur de session agencé afin de communiquer avec un client et comprenant un serveur mandataire de signalisation et un serveur mandataire média, le contrôleur de session étant agencé pour verrouiller une adresse et un port de plan média,
dans lequel le serveur mandataire de signalisation est agencé pour détecter que le chient change ou a changé son adresse IP et/ou port pour une adresse et/ou port différent et est agencé pour donner instruction au serveur mandataire média, en réponse à la détection d'un tel changement, de surveiller les média entrants depuis le client d'une adresse et/ou port différent de l'adresse et/ou port que le serveur mandataire média a utilisé précédemment comme l'adresse et/ou port du client que le serveur mandataire média a utilisé précédemment comme l'adresse et/ou port du client ; et dans lequel le serveur mandataire média est agencé pour utiliser ladite adresse et/ou port différent comme adresse et/ou port de destination pour les médias provenant du serveur mandataire média du client si un quelconque média est reçu par le serveur mandataire média d'une telle adresse et/ou port différent.

13. Contrôleur de session selon la revendication 12, dans lequel le serveur mandataire de signalisation est agencé pour notifier au serveur mandataire média quel type de média le client enverra au serveur mandataire média après le changement d'adresse et/ou port, et le serveur mandataire média est agencé pour utiliser seulement ladite adresse et/ou port différent comme ladite adresse et/ou port de destination si le type de médias desdits médias d'une telle adresse et/ou port différent tel que reçus par le serveur mandataire média correspond au type de médias tel que notifié par le serveur mandataire de signalisation.

14. Contrôleur de session selon la revendication 12 ou 13, agencé pour utiliser un port différent seulement si l'adresse via laquelle les médias ont été reçus est la même que l'adresse à laquelle le contrôleur de session a été verrouillé.

15. Contrôleur de session selon une quelconque des revendications 12 à 14, dans lequel le serveur mandataire de signalisation et le serveur mandataire média communiquent via H.248.

16. Contrôleur de session selon la revendication 15, dans lequel le serveur mandataire de signalisation est agencé pour envoyer un paramètre au serveur mandataire média pour donner instruction au serveur mandataire média, le paramètre ayant au moins 3 valeurs possibles.

17. Contrôleur de session selon la revendication 17, dans lequel le serveur mandataire de signalisation est agencé pour envoyer un signal H.248 au serveur mandataire média pour donner instruction au serveur mandataire média.

18. Contrôleur de session selon une quelconque des revendications 12 à 17, dans lequel le serveur mandataire de signalisation et le serveur mandataire média sont des dispositifs physiquement séparés.

19. Contrôleur de session selon une quelconque des revendications 12 à 18, dans lequel le serveur mandataire média est agencé pour rejeter tous médias de l'adresse et de port précédemment utilisés qu'il reçoit après la réception des médias d'une telle adresse et/ou port différent.

20. Contrôleur de session selon une quelconque des revendications 12 à 19, dans lequel le serveur mandataire média, après la réception de médias d'une telle adresse et/ou port différent, est agencé pour rejeter tous médias de n'importe quelle combinaison d'adresse et de port autre que la combinaison de l'adresse et/ou port différent.

21. Contrôleur de session selon une quelconque des revendications 12 à 20, dans lequel le serveur mandataire média, après avoir reçu une telle instruction, est agencé pour continuer de recevoir des médias de l'adresse et port précédemment utilisé sans les rejeter jusqu'à ce qu'il reçoive des médias d'une telle adresse et/ou port différent.

22. Contrôleur de session selon une quelconque des revendications 12 à 21, dans lequel le contrôleur de session est agencé pour communiquer avec le client via un ou plusieurs traducteurs d'adresse de réseau et/ou numéro de port.

23. Serveur mandataire de signalisation à utiliser dans un contrôleur de session, lequel contrôleur de session est agencé pour communiquer avec un client et comprenant ledit serveur mandataire de signalisation et un serveur mandataire média, le contrôleur de session étant agencé pour se verrouiller à une adresse et port de plan média,
dans lequel le serveur mandataire de signalisation est agencé pour détecter que le client change ou a changé son adresse IP et/ou port en une adresse et/ou port différent et est agencé pour donner instruction au serveur mandataire média, en réponse à la détection d'un tel changement, de surveiller les médias entrants provenant du client d'une adresse et/ou port différent de l'adresse et/ou port que le serveur mandataire média a précédemment utilisé comme l'adresse et/ou port du client.

24. Serveur mandataire média à utiliser dans un contrôleur de session, lequel contrôleur de session est agencé pur communiquer avec un client et comprenant un serveur mandataire de signalisation et ledit serveur mandataire média, le contrôleur de session étant agencé pour se verrouiller à une adresse et port de plan média,
dans lequel le serveur mandataire média est agencé pour recevoir une instruction du serveur mandataire de signalisation, en réponse au serveur mandataire de signalisation détectant que le client change ou a changé son adresse IP et/ou port en une adresse et/ou port différent, surveiller les médias entrants du client d'une adresse et/ou port différent de l'adresse et/ou port que le serveur mandataire média a utilisé précédemment comme l'adresse et/ou port du client ; et
dans lequel le serveur mandataire média est agencé pour utiliser ladite adresse différente et/ou port comme adresse et/ou port de destination pour les médias du serveur mandataire médias au client si un quelconque média est reçu par le serveur mandataire média d'une telle adresse et/ou port différent.
